(19) Europäisches Patentamt
European Patent Office
Office européen des brevets

(11) EP 4 564 086 A1

(12) EUROPEAN PATENT APPLICATION
published in accordance with Art. 153(4) EPC

(43) Date of publication:
04.06.2025 Bulletin 2025/23

(51) International Patent Classification (IPC):
G02F 1/137 (2006.01)          G02F 1/13 (2006.01)
G02F 1/1334 (2006.01)         G02F 1/1339 (2006.01)

(21) Application number: 23846624.7

(22) Date of filing: 27.07.2023

(52) Cooperative Patent Classification (CPC):
G02F 1/13; G02F 1/1334; G02F 1/1339;
G02F 1/137

(86) International application number:
PCT/JP2023/027592

(87) International publication number:
WO 2024/024894 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.07.2022 JP 2022119810

(71) Applicant: Toppan Holdings Inc.
Tokyo 110-0016 (JP)

(72) Inventors:
• YOSHIDA, Tetsushi
Tokyo 110-0016 (JP)
• SAKAMOTO, Katsuhito
Tokyo 110-0016 (JP)

(74) Representative: TBK
Bavariaring 4-6
80336 München (DE)

(54) **LIGHT CONTROL SHEET AND LIGHT CONTROL DEVICE**

(57) A light control sheet includes a first transparent electrode layer, a second transparent electrode layer, and a light control layer located between the first transparent electrode layer and the second transparent electrode layer, and exhibits a first state and a second state having a haze value lower than that of the first state according to the magnitude of a voltage applied to the light control layer. The light control layer includes a transparent polymer layer containing a plurality of voids, a liquid crystal composition filled in the voids and containing a dichroic dye, and spacers that define the thickness of the light control layer. The spacers exhibit a black color. The area occupancy ratio of the spacers in the light control layer is greater than or equal to 0.7%.

FIG.2

EP 4 564 086 A1

**Description**

[Technical Field]

The present disclosure relates to a light control sheet and a light control device.

[Background Art]

A light control sheet includes a first transparent electrode layer, a second transparent electrode layer, and a light control layer located between the first transparent electrode layer and the second transparent electrode layer. The light control layer includes a transparent polymer layer containing a plurality of voids, and a liquid crystal composition filled in the voids. The alignment of a liquid crystal compound contained in the liquid crystal composition changes depending on the magnitude of a voltage applied between the transparent electrode layers. This allows the light control sheet to have a transparent state of transmitting most of the light entering the light control sheet and an opaque state of scattering light entering the light control sheet. Therefore, the light control sheet can be used as a partition that is disposed at the boundary between two spaces, such that visual confirmation of one space from the other space through the light control sheet is switchable between possible and impossible (for example, see PTL 1).

[Citation List]

[Patent Literature]

PTL 1: JP 2020-177197 A

[Summary of the Invention]

[Technical Problem]

As a structure capable of suppressing translucency when a light control sheet is opaque, there is proposed a structure capable of exhibiting black color when a light control sheet exhibits opaqueness. On the other hand, a light control sheet is also required to have enhanced transparency when it is transparent, i.e. to have an enhanced contrast that is a ratio of the transmittance when transparent to the transmittance when opaque, while being capable of suppressing translucency when opaque.

[Solution to Problem]

A light control sheet for solving the above-described problem includes a first transparent electrode layer, a second transparent electrode layer, and a light control layer located between the first transparent electrode layer and the second transparent electrode layer, and exhibits a first state and a second state having a haze value lower than that of the first state according to the magnitude of a voltage applied to the light control layer. The light control layer includes a transparent polymer layer containing a plurality of voids, a liquid crystal composition filled in the voids and containing a dichroic dye, and spacers that define the thickness of the light control layer. The spacers exhibit a black color. The area occupancy ratio of the spacers in the light control layer is greater than or equal to 0.7%.

A light control device for solving the above-described problem includes the light control sheet and a driver unit configured to be capable of applying a voltage to the light control layer contained in the light control sheet.

According to the above-described light control sheet and light control device, the area occupancy ratio of the spacers exhibiting a black color in the light control layer is greater than or equal to 0.7%, so that the contrast of the light control sheet can be enhanced.

In the light control sheet, the content ratio of the dichroic dye in the light control layer may be greater than or equal to 2% by weight and less than or equal to 5% by weight.

According to the light control sheet, the light control layer contains greater than or equal to 2% by weight and less than or equal to 5% by weight of the dichroic dye, so that the fluctuation of the total light transmittance in the plane of the light control sheet in the second state can be suppressed.

In the light control sheet, the content ratio of the spacers is greater than or equal to 2 x (S/2)% by weight and less than or equal to 5 x (S/2)% by weight. In a two-dimensional coordinate system defined by the content ratio of the spacers and the content ratio of the dichroic dye, the content ratio of the spacers and the content ratio of the dichroic dye may be within a region defined by two equations below.

$$y = (-3x + 14)(S/2) \ldots \text{equation (1)}$$

$$y = (-3x + 17)(S/2) \ldots \text{equation (2)}$$

In the equations, y is the content ratio of the spacers, x is the content ratio of the dichroic dye, and S is the specific gravity of the spacers.

According to the light control sheet, the content ratio of the dichroic dye and the content ratio of the spacers are within the above-described region, so that both the total light transmittance when the light control sheet is in the second state and the contrast of the light control sheet are within a suitable range.

In the light control sheet, the void diameter of the voids may be greater than or equal to 0.1 μm and less than or equal to 30 μm, and the content ratio of the liquid crystal composition in the light control layer may be greater than or equal to 30% by weight and less than or equal to 70% by weight.

According to the light control sheet, the void diameter is greater than or equal to 0.1 μm and less than or equal to 30 μm, and the content ratio of the liquid crystal composition is greater than or equal to 30% by weight and less than or equal to 70% by weight, so that the effectiveness of the content ratio of the spacers and the content ratio of the dichroic dye can be enhanced.

In the light control sheet, the haze value of the light control sheet in the first state may be greater than or equal to 80%. According to this light control sheet, the haze value of the light control sheet in the first state is greater than or equal to 80%, so that the effectiveness of the content ratio of the spacers and the content ratio of the dichroic dye can be enhanced.

A light control sheet for solving the above-described problem includes a first transparent electrode layer, a second transparent electrode layer, and a light control layer located between the first transparent electrode layer and the second transparent electrode layer, and exhibits a first state and a second state having a haze value lower than that of the first state according to the magnitude of a voltage applied to the light control layer. The light control layer includes a transparent polymer layer containing a plurality of voids, a liquid crystal composition filled in the voids and containing a dichroic dye, and spacers that define the thickness of the light control layer, and the spacers exhibit a black color. The content ratio of the dichroic dye is greater than or equal to 3% by weight and less than or equal to 5% by weight. In a two-dimensional coordinate system defined by the area occupancy ratio of the spacers and the content ratio of the dichroic dye, the area occupancy ratio of the spacers and the content ratio of the dichroic dye are within a region of greater than or equal to an equation below.

$$y = -0.18x + 0.99$$

In the equation, y is the area occupancy ratio of the spacers, and x is the content ratio of the dichroic dye.

According to the light control sheet, the area occupancy ratio of the spacers exhibiting a black color and the content ratio of the dichroic dye in the light control layer are within a region of greater than or equal to the above-described equation, so that the light control layer contains greater than or equal to 3% by weight and less than or equal to 5% by weight of the dichroic dye while the contrast of the light control sheet is enhanced. This can suppress the fluctuation of the total light transmittance in the plane of the light control sheet in the second state.

In the light control sheet, the area occupancy ratio of the spacers may be less than or equal to 4.5%, and a point defined by the area occupancy ratio of the spacers and the content ratio of the dichroic dye may be within a region of less than or equal to an equation below:

$$y = -3x + 13.5.$$

According to the light control sheet, the contrast of the light control sheet can be enhanced, and further the total light transmittance when the light control sheet exhibits the second state can be enhanced.

[Advantageous Effects of the Invention]

According to the present disclosure, the contrast of the light control sheet can be enhanced.

[Brief Description of the Drawings]

Fig. 1 is a cross-sectional view illustrating a structure of a first light control device including a normal-type light control sheet.

Fig. 2 is a partially enlarged cross-sectional view illustrating an enlarged part of the structure of the light control layer illustrated in Fig. 1 in a state in which a voltage is not applied to the light control sheet.

Fig. 3 is a partially enlarged cross-sectional view illustrating an enlarged part of the structure of the light control layer illustrated in Fig. 1 in a state in which a voltage is applied to the light control sheet.

Fig. 4 is a cross-sectional view illustrating a structure of a second light control device including a reverse-type light control sheet.

Fig. 5 is a partially enlarged cross-sectional view illustrating an enlarged part of the structure of the light control layer illustrated in Fig. 4 in a state in which a voltage is not applied to the light control sheet.

Fig. 6 is a partially enlarged cross-sectional view illustrating an enlarged part of the structure of the light control sheet illustrated in Fig. 4 in a state in which a voltage is applied to the light control layer.

Fig. 7 is a graph illustrating a relationship between a content ratio of a dichroic dye and a total light transmittance in a state in which a voltage is applied to a light control layer.

Fig. 8 is a graph illustrating a relationship between a content ratio of a dichroic dye and a total light transmittance in a state in which a voltage is not applied to a light control layer.

Fig. 9 is a graph illustrating a relationship between a content ratio of a dichroic dye and a contrast.

Fig. 10 is a graph illustrating a two-dimensional coordinate system defined by a content of a dichroic dye and a content of spacers.

[Description of the Embodiments]

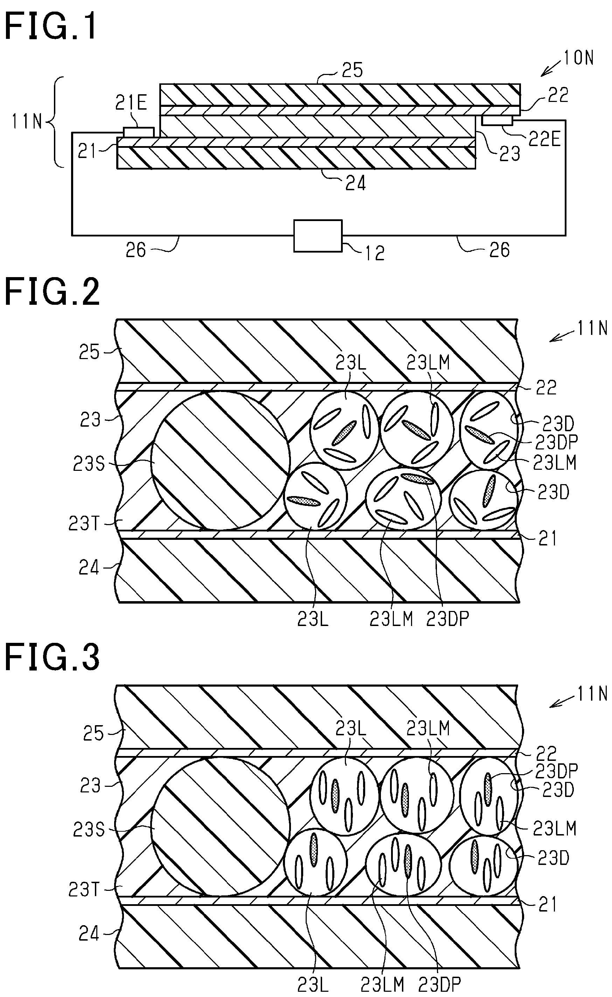

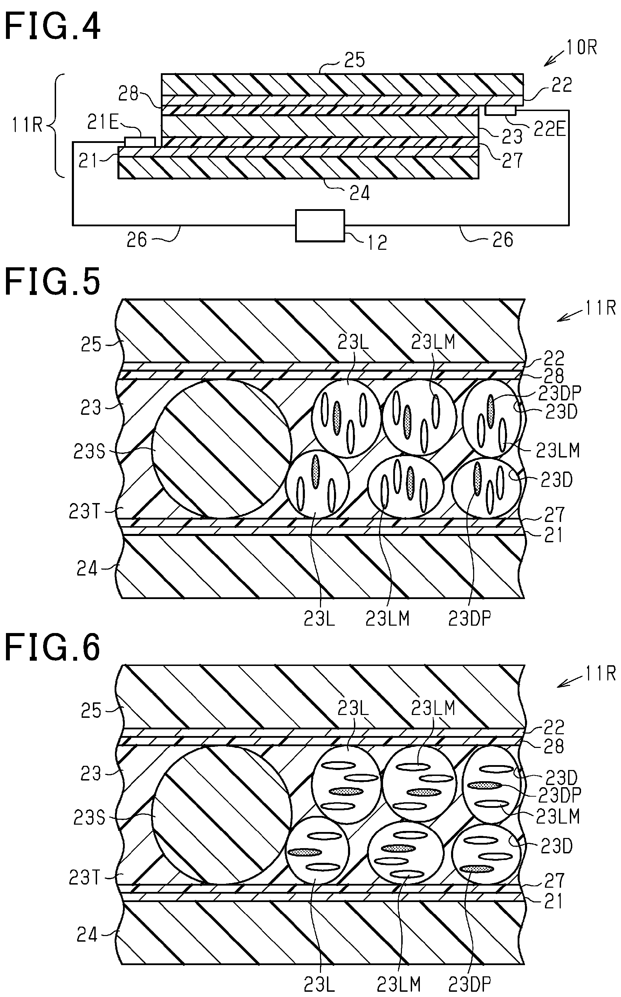

An embodiment of the light control sheet will be described with reference to Figs. 1 to 10. The type of the light control sheet according to the present disclosure may be either normal or reverse. Hereinafter, a first light control device including a normal-type light control sheet and a driver unit will be described with reference to Figs. 1 to 3, and a second light control device including a reverse-type light control sheet and a driver unit will be described with reference to Figs. 4 to 6.

The light control sheet is attached to, for example, transparent members provided to windows of various buildings such as a house, a station, and an airport, partitions installed in offices, display windows installed in stores, and the like. Alternatively, the light control sheet is attached to transparent members provided to windows of mobile objects such as vehicles and aircraft. The shape of the light control sheet may be flat or curved.

[First light control device]

The first light control device will be described with reference to Figs 1 to 3. Fig. 1 illustrates a structure of a light control device including a normal-type light control sheet. Fig. 2 illustrates a part of a structure of a light control sheet in a state in which a voltage is not applied to a light control layer. Fig. 3 illustrates a part of a structure of a light control sheet in a state in which a voltage is applied to a light control layer.

As illustrated in Fig. 1, a first light control device 10N includes a normal-type light control sheet 11N and a driver unit 12. The light control sheet 11N includes a first transparent electrode layer 21, a second transparent electrode layer 22, and a light control layer 23. The light control sheet 11N further includes a first transparent substrate 24 that supports the first transparent electrode layer 21 and a second transparent substrate 25 that supports the second transparent electrode layer 22.

In the light control sheet 11N, the light control layer 23 is located between the first transparent electrode layer 21 and the second transparent electrode layer 22. The first transparent electrode layer 21 is located between the first transparent substrate 24 and the light control layer 23. The second transparent electrode layer 22 is located between the second transparent substrate 25 and the light control layer 23.

The light control sheet 11N exhibits a first state and a second state having a haze value lower than that of the first state according to the magnitude of a voltage applied to the light control layer 23. Since the type of the light control sheet 11N of the first light control device 10N is normal, the light control sheet 11N exhibits the first state in a state in which a voltage is not applied to the light control layer 23. On the other hand, the light control sheet 11N exhibits the second state in a state in which a voltage is applied to the light control layer 23. The light control sheet 11N exhibiting the first state is opaque, and the light control sheet 11N exhibiting the second state is transparent. For example, the light control sheet 11N exhibiting the first state may have a haze value of greater than or equal to 80%, and the light control sheet 11N exhibiting the second state may have a haze value of less than or equal to 5%.

The light control sheet 11N includes a first electrode 21E attached to a part of the first transparent electrode layer 21 and a second electrode 22E attached to a part of the second transparent electrode layer 22. The light control sheet 11N further includes a wiring 26 connected to the first electrode 21E and a wiring 26 connected to the second electrode 22E. The first electrode 21E is connected to the driver unit 12 via the wiring 26. The second electrode 22E is connected to the driver unit 12 via the wiring 26.

The first transparent electrode layer 21 and the second transparent electrode layer 22 apply, to the light control layer 23, a voltage for switching the light control layer 23 between transparent and opaque. The transparent electrode layers 21 and 22 each have light permeability to transmit visible light. The light permeability of the first transparent electrode layer 21 enables visual recognition of objects through the light control sheet 11N. The light permeability of the second transparent electrode layer 22 enables visual recognition of objects through the light control sheet 11N, in the same manner as the light permeability of the first transparent electrode layer 21.

A material for forming the transparent electrode layers 21 and 22 may be, for example, any one selected from the group consisting of indium tin oxide, fluorine-doped tin oxide, tin oxide, zinc oxide, carbon nanotubes, and poly(3,4-ethylenedioxythiophene).

A material for forming the transparent substrates 24 and 25 may be a synthetic resin or an inorganic compound. Examples of the synthetic resin include polyester, polyacrylate, polycarbonate, and polyolefin. Examples of the polyester include polyethylene terephthalate and polyethylene naphthalate. An example of the polyacrylate is polymethyl methacrylate. Examples of the inorganic compound include silicon dioxide, silicon oxynitride, and silicon nitride.

Each of the electrodes 21E and 22E is, for example, a flexible printed circuit board (FPC). The FPC includes a support layer, a conductor, and a protective layer. The conductor is sandwiched between the support layer and the protective layer. The support layer and the protective layer are formed of an insulating synthetic resin. The support layer and the protective layer are formed of, for example, polyimide. The conductor is formed of, for example, a metal thin film. A material for forming the metal thin film may be, for example, copper. Each of the electrodes 21E and 22E is not limited to an FPC, and may be, for example, a metal tape.

The electrodes 21E and 22E are respectively attached to the transparent electrode layers 21 and 22 via unillustrated conductive adhesive layers. In a portion of each of the electrodes 21E and 22E which is connected to the conductive adhesive layer, the conductor is exposed from the protective layer or the support layer.

The conductive adhesive layer may be formed of, for example, an anisotropic conductive film (ACF), an anisotropic conductive paste (ACP), an isotropic conductive film (ICF), an isotropic conductive paste (ICP), or the like. From the viewpoint of handling properties in the production process of the light control device 10, the conductive adhesive layer is preferably an anisotropic conductive film.

Each of the wirings 26 is formed of, for example, a metal wire and an insulating layer covering the metal wire. The wire is formed of, for example, copper.

The driver unit 12 is configured to be capable of applying a voltage to the light control layer 23 of the light control sheet 11N. The driver unit 12 applies an AC voltage between the first transparent electrode layer 21 and the second transparent electrode layer 22. The driver unit 12 preferably applies an AC voltage having a rectangular waveform between the pair of the transparent electrodes 21 and 22. In other words, the driver unit 12 preferably outputs a rectangular-wave voltage signal.

With reference to Figs. 2 and 3, the structure of the light control layer 23 will be described in more detail. Note that in Figs. 2 and 3, the thickness of the light control layer 23 is thicker than the thickness of the transparent substrates 24 and 25, for the convenience of describing the structure of the light control layer 23 contained in the light control sheet 11N.

As illustrated in Fig. 2, the light control layer 23 includes a transparent polymer layer 23T, a liquid crystal composition 23L, and spacers 23S. The transparent polymer layer 23T contains a plurality of voids 23D. The liquid crystal composition 23L is filled in the voids 23D contained in the transparent polymer layer 23T, and contains a dichroic dye 23DP.

The light control layer 23 satisfies the following conditions.

(Condition 1) The spacers 23S exhibit a black color.

(Condition 2) The area occupancy ratio of the spacers 23S in the light control layer 23 is greater than or equal to 0.7%.

According to the light control sheet 11N of the present disclosure, the area occupancy ratio of the spacers 23S exhibiting a black color is greater than or equal to 0.7% in the light control layer 23, so that the contrast of the light control sheet 11N can be enhanced.

Further, the light control layer 23 preferably satisfies the following condition.

(Condition 3) The content ratio of the dichroic dye 23DP in the light control layer 23 is greater than or equal to 2% by weight and less than or equal to 5% by weight.

The light control layer 23 contains greater than or equal to 2% by weight and less than or equal to 5% by weight of the dichroic dye 23DP, so that the fluctuation of the total light transmittance in the plane of the light control sheet 11N in the second state can be suppressed.

The content ratio of the spacers 23S in the light control layer 23 is the percentage of the weight of the spacers 23S to the total weight of the light control layer 23, i.e. to the sum of the weight of the transparent polymer layer 23T, the weight of the liquid crystal composition 23L, and the weight of the spacers 23S. When the specific gravity of the spacers 23S is 2, the content ratio of the spacers 23S may be, for example, greater than or equal to 0.8% by weight. When the specific gravity of the spacers 23S is 2, and the content ratio of the spacers 23S is 0.8% by weight, the area occupancy ratio of the spacers 23S is 0.7%. The content ratio of the dichroic dye 23DP in the light control layer 23 is the percentage of the weight of the dichroic dye 23DP to the above-described total weight of the light control layer 23.

The holding type of the liquid crystal composition 23L is any one selected from the group consisting of a polymer network type, a polymer dispersion type, and a capsule type. The polymer network type includes a three-dimensional mesh transparent polymer network, and holds the liquid crystal composition 23L in the mutually communicating mesh voids 23D. The polymer network is an example of the transparent polymer layer 23T. The polymer dispersion type includes a large number of isolated voids 23D in the transparent polymer layer 23T, and holds **the liquid crystal** composition in the voids 23D dispersed in the transparent polymer layer 23T. The capsule type holds the liquid crystal composition 23L having a capsule shape in the transparent polymer layer 23T. This causes formation of the voids 23D, which is to be filled with the liquid crystal composition 23L, in the transparent polymer layer 23T.

The liquid crystal composition 23L contains a liquid crystal compound 23LM. An example of the liquid crystal compound 23LM is any selected from the group consisting of those based on a Schiff base, azo, azoxy, biphenyl, terphenyl, benzoic acid ester, tolan, pyrimidine, cyclohexanecarboxylic acid ester, phenylcyclohexane, and dioxane. The liquid crystal composition 23L contains, as the liquid crystal compound 23LM, positive-type nematic liquid crystals having positive dielectric anisotropy.

In the light control layer 23, the void diameter of the voids 23D is greater than or equal to 0.1 $\mu$m and less than or equal to 30 $\mu$m, and the content ratio of the liquid crystal composition 23L in the light control layer 23 is greater than or equal to 30% by weight and less than or equal to 70% by weight. This can enhance the effectiveness of the content ratio of the spacers 23 S and the content ratio of the dichroic dye 23DP. The void diameter is measured in the cross section of the light control layer 23 along the thickness direction of the light control layer 23. When the voids 23D have a circular shape in the cross section, the diameter of the voids 23D is the void diameter. When the voids 23D have an elliptical shape, the major axis of the voids 23D is the void diameter. When the voids 23D have an amorphous shape, the major axis of an ellipse having the minimum major axis, among ellipses circumscribing the voids 23D, is the void diameter of the voids 23D.

The content ratio of the liquid crystal composition 23L in the light control layer 23 is the percentage of the weight of the liquid crystal composition 23L to the total weight of the light control layer 23. The content ratio of the liquid crystal composition 23L is equal to the sum of the blend ratio of the liquid crystal compound 23LM and the blend ratio of the dichroic dye 23DP when preparing the light control layer 23.

The dichroic dye 23DP has an elongated shape. The absorbance in the visible range in the major axis direction of the molecules of the dichroic dye 23DP is larger than the absorbance in the visible range in the minor axis direction of the molecules. The dichroic dye 23DP exhibits substantial transparency when the major axis direction is parallel or substantially parallel to the light incident direction. On the other hand, the dichroic dye 23DP exhibits a prescribed color when the major axis direction is perpendicular or substantially perpendicular to the light incident direction.

Therefore, the dichroic dye 23DP exhibits transparency when the major axis direction is aligned to be parallel or substantially parallel to the normal direction of a surface of the light control layer 23 in contact with the first transparent electrode layer 21 and a surface of the second transparent electrode layer 22 in contact with the light control layer 23. On the other hand, the dichroic dye 23DP exhibits a prescribed color when the major axis direction is aligned to be perpendicular or substantially perpendicular to the normal direction of a surface of the light control layer 23 in contact with the first transparent electrode layer 21 and a surface of the second transparent electrode layer 22 in contact with the light control layer 23. A color exhibited by the dichroic dye 23DP is preferably a black color or a color close to a black color. The dichroic dye 23DP is driven by a guest-host form with the liquid crystal compound 23LM as a host, so that the dichroic dye 23DP exhibits a color.

The dichroic dye 23DP is at least one selected from the group consisting of polyiodide, an azo compound, an anthraquinone compound, a naphthoquinone compound, an azomethine compound, a tetrazine compound, a quinophthalone compound, a merocyanine compound, a perylene compound, and a dioxazine compound. The dichroic dye 23DP may be one dye or a combination of two or more dyes. From the viewpoints of enhancing the light resistance of the dichroic dye 23DP and enhancing the dichroic ratio, the dichroic dye 23DP is preferably at least one selected from the group consisting of an azo compound and an anthraquinone compound. The dichroic dye 23DP is more preferably an azo compound.

The liquid crystal composition 23L may contain, other than the liquid crystal compound 23LM and the dichroic dye 23DP described above, for example, a monomer for forming the transparent polymer layer 23T.

The spacers 23S are dispersed in the entirety of the transparent polymer layer 23T. The spacers 23S define the thickness of the light control layer 23 in the surroundings of the spacers 23S and suppresses a fluctuation in the thickness of the light control layer 23. The spacers are a bead spacer. It is preferable that the spacers 23S exhibit a black color, and a color exhibited by the spacers 23S be the same color as a color exhibited by the dichroic dye 23DP. When the color exhibited by the spacers 23S is the same as a color exhibited by the dichroic dye, the depth of the color exhibited by the light control sheet 11N in the first state can be enhanced.

The spacers 23S may have a spherical shape or a columnar shape. The size of the **spacers** in the thickness direction of the light control layer 23 is appropriately changed according to the thickness required of the light control layer 23. The size of the **spacers** in the thickness direction of the light control layer 23 is, for example, greater than or equal to 10 $\mu$m and less than or equal to 25 $\mu$m. When the spacers 23S has a spherical shape, the average particle diameter of the spacers 23S is, for example, greater than or equal to 10 $\mu$m and less than or equal to 25 $\mu$m. The average particle diameter of the **spacers** is obtained using a particle size distribution measuring device adopting principles such as laser light scattering, electrical resistivity change, and analysis of a captured image. The average particle diameter of the spacers 23S is a number average particle diameter. When the spacers 23S has a columnar shape, the average diameter of the spacers 23S is, for example, greater than or equal to 10 $\mu$m and less than or equal to 25 $\mu$m.

The area occupancy ratio of the spacers 23S may be, for example, greater than or equal to 3% and less than or equal to 8%. The area occupancy ratio of the spacers 23S is the percentage of the area occupied by the spacers 23S to the unit area of the light control sheet 11N. The area occupied by the spacers 23S is obtained by observing the light control sheet 11N in the second state from an eye point facing the plane in which the light control sheet 11N spreads. An example of the unit area in the light control sheet 11N is 1 mm x 1 mm. The area occupied by the spacers 23S is calculated by observing the inside of the unit area of the light control sheet 11N in a transparent state using an optical microscope. The black color exhibited by the spacers 23S enables a region corresponding to the spacers 23S exhibiting a black color in an image captured by the optical microscope. The area occupied by the spacers 23S is obtained by binarizing the image captured by an optical microscope and summing the areas of granular regions exhibiting a black color. When the spacers 23S have a spherical shape, the granular region has a spherical shape. When the spacers 23S have a columnar shape, the granular region has a rectangular shape.

The area occupancy ratio of the spacers 23S may be, for example, greater than or equal to 0.7% and less than or equal to 8%, and may be greater than or equal to 0.7% and less than or equal to 4.5%.

A material constituting the spacers 23S may contain a transparent inorganic compound having electrical insulation properties, or may contain a transparent resin having electrical insulation properties. The transparent inorganic compound is any one selected from the group consisting of silicon dioxide and aluminum oxide. The transparent resin is at least one selected from the group consisting of acrylic resin, epoxy resin, phenol resin, melamine resin, polyester, polycarbonate, polyolefin, polyvinyl chloride, polyvinylidene chloride, polystyrene, and acetyl cellulose.

As described above, the spacers 23S contain a black pigment, so that they exhibit a black color. The black pigment is preferably a pigment capable of absorbing ultraviolet light. Examples of the black pigment capable of absorbing ultraviolet light may include carbon black, graphite, carbon nanotubes, and an oxide-based black pigment. The oxide-based black pigment may be a complex oxide. When the black pigment is capable of absorbing ultraviolet light, the light resistance of the light control sheet 11N containing the spacers 23S can be enhanced.

When the spacers 23S are dispersed in a coating liquid for forming the light control layer 23, i.e. a liquid body containing a curable compound and a liquid crystal compound, the spacers 23S may be surface-treated for imparting lyophilic properties.

As illustrated in Fig. 2, the liquid crystal compound 23LM has no prescribed regularity in the alignment in the major axis direction in a state in which no voltage is applied to the light control layer 23. That is, the liquid crystal compound 23LM is irregularly aligned inside the voids 23D. This causes the dichroic dye 23DP to be irregularly aligned within the voids 23D in the same manner as the liquid crystal compound 23LM. Therefore, the light control layer 23 and accordingly the light control sheet 11N are opaque in a state in which no voltage is applied to the light control layer 23. This causes the light control sheet 11N to exhibit the first state having a relatively high haze value. The light control sheet 11N exhibits a prescribed color by the dichroic dye 23DP.

The light control sheet 11N in the first state has a haze value of greater than or equal to 80%. This can enhance the effectiveness of the content ratio of the spacers 23S and the content ratio of the dichroic dye 23DP. The haze value is obtained by a measurement method according to ASTM D 1003-00. The measuring instrument of the haze value is, for example, a BYK haze-gard i instrument (manufactured by BYK Gardner). In the measurement of the haze value, light rays contained in luminous flux entering the light control sheet 11N travel in straight lines. The maximum angle between the light rays contained in luminous flux entering the light control sheet 11N and the optical axis of the luminous flux is less than 3°. The light control sheet 11N is fixed such that the surface of the light control sheet 11N and luminous flux entering the surface forms a right angle $\pm$ 2°.

As illustrated in Fig. 3, in a state in which a voltage is applied to the light control layer 23, the liquid crystal compound 23LM is aligned in parallel to an electric field. The light control sheet 11N is configured that when a voltage is applied to the light control layer 23, the major axis direction of the liquid crystal compound 23LM is perpendicular to the above-described contact surface. That is, the liquid crystal compound 23LM is vertically aligned. This causes the dichroic dye 23DP to be vertically aligned in the same manner as the liquid crystal compound 23LM. Therefore, the light control layer 23 and accordingly the light control sheet 11N are transparent in a state in which a voltage is applied to the light control layer 23. This causes the light control sheet 11N to have a relatively low haze value. In addition, the light control sheet 11N does not exhibit a prescribed color by the dichroic dye 23DP, i.e. exhibits transparency.

[Second light control device]

The second light control device will be described with reference to Figs 4 to 6. The second light control device is different from the above-described first light control device 10N in that it includes a reverse-type light control sheet. Therefore, a difference from the first light control device in the second light control device will be described in detail below, but detailed description of structure that is common between the second light control device and the first light control device will be omitted by assigning the same reference signs as in the first light control device.

As illustrated in Fig. 4, a second light control device 10R includes a reverse-type light control sheet 11R and a driver unit 12. The light control sheet 11R includes, in addition to layers contained in the normal-type light control sheet 11N, a first alignment film 27 and a second alignment film 28. The light control layer 23 is located between the first alignment film 27 and the second alignment film 28. The first alignment film 27 is located between the light control layer 23 and the first transparent electrode layer 21, and is in contact with the light control layer 23. The second alignment film 28 is located between the light control layer 23 and the second transparent electrode layer 22, and is in contact with the light control layer 23.

A material for forming the first alignment film 27 and the second alignment film 28 is an organic compound, an inorganic compound, or a mixture thereof. Examples of the organic compound include polyimide, polyamide, polyvinyl alcohol, and a cyanide compound. Examples of the inorganic compound include silicon oxide and zirconium oxide. A material for forming the alignment films 27 and 28 may be silicone. Silicone is a compound that contains an inorganic moiety and an organic moiety.

The first alignment film 27 and the second alignment film 28 are, for example, a vertical alignment film. The vertical alignment film aligns the major axis direction of the liquid crystal compound to be perpendicular to a surface opposite a surface in contact with the first transparent electrode 21 and to a surface opposite a surface in contact with the second transparent electrode layer 22. In this manner, the alignment films 27 and 28 regulate the alignment in a plurality of liquid crystal compounds contained in the light control layer 23.

With reference to Figs. 5 and 6, the light control layer 23 will be described in more detail. Note that in Figs. 5 and 6, the thickness of the light control layer 23 is thicker than the thickness of the transparent substrates 24 and 25, for the convenience of describing the structure of the light control layer 23 contained in the light control sheet 11R.

As illustrated in Fig. 5, the light control layer 23 includes the transparent polymer layer 23T containing the voids 23D and the liquid crystal composition 23L filled in the voids 23D, in the same manner as the light control layer 23 contained in the normal-type light control sheet 11N. The liquid crystal composition 23L contains the liquid crystal compound 23LM and the dichroic dye 23DP. However, the liquid crystal composition 23L contains, as the liquid crystal compound 23LM, negative-type nematic liquid crystals having negative dielectric anisotropy. The light control layer 23 satisfies conditions 1 to 3 in the same manner as the normal-type light control sheet 11N.

As illustrated in Fig. 5, in a state in which no voltage is applied to the light control layer 23, the liquid crystal compound 23LM is aligned perpendicular to the above-described contact surface by the alignment regulation force of the alignment films 27 and 28. This causes the dichroic dye 23DP to be vertically aligned in the same manner as the liquid crystal compound 23LM. Therefore, the light control layer 23 and accordingly the light control sheet 11R are transparent in a state in which no voltage is applied to the light control layer 23. This causes the light control sheet 11R to exhibit the second state having a relatively low haze value. In addition, the light control sheet 11R does not exhibit a color by the dichroic dye 23DP, i.e. exhibits transparency.

As illustrated in Fig. 6, in a state in which a voltage is applied to the light control layer 23, the liquid crystal compound 23LM is aligned perpendicular to an electric field. The light control sheet 11R is configured that when a voltage is applied to the light control layer 23, the major axis direction of the liquid crystal compound 23LM is in parallel to the above-described contact surface. That is, the liquid crystal compound 23LM is horizontally aligned. This causes the dichroic dye 23DP to be horizontally aligned in the same manner as the liquid crystal compound 23LM. Therefore, the light control layer 23 and accordingly the light control sheet 11R are opaque in a state in which a voltage is applied to the light control layer 23. This causes the light control sheet 11R to exhibit the first state having a relatively high haze value. The light control sheet 11R exhibits a prescribed color by the dichroic dye 23DP.

[Test example]

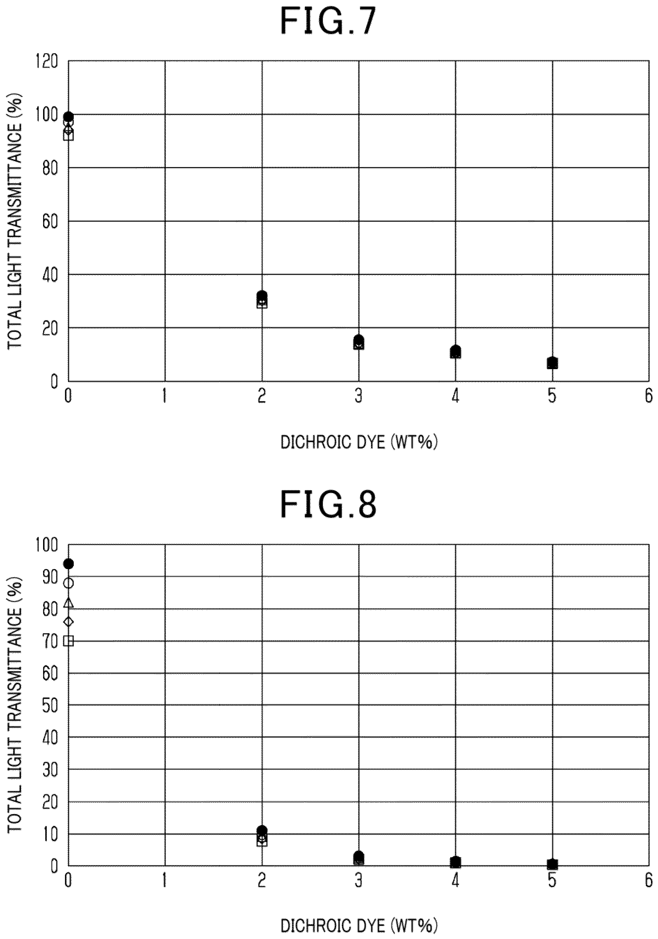

A test example will be described with reference to Figs. 7 to 10.

[Light control sheet]

Hereinafter, a specific test example of the light control sheet 11N will be described.
Materials common among the light control sheets 11N prepared in a test example are illustrated below.

(a) Transparent electrode layers 21, 22: indium tin oxide

(b) Transparent substrates 24, 25: polyethylene terephthalate film

(c) Spacers 23S: spherical silica particles containing carbon black (diameter: 15 μm, specific gravity: 2)

(d) Liquid crystal compound 23LM: fluorine-based liquid crystal compound

(e) Polymerization initiator: photopolymerization initiator (Irgacure Oxe04, manufactured by BASF)

(f) Polymerizable composition: mixture of isobornyl acrylate, pentaerythritol triacrylate, and urethane acrylate

(g) Dichroic dye 23DP: azo-based compound-mixed dye (Irgaphor Black X12 DC, manufactured by BASF)

First, a light control sheet that does not contain the spacers 23S and the dichroic dye 23DP was produced. In production, there were prepared the first transparent substrate 24 provided with the first transparent electrode layer 21, and the second transparent substrate 25 provided with the second transparent electrode layer 22. Next, there was prepared a coating liquid containing the liquid crystal compound 23LM, a polymerization initiator, and a polymerizable composition. Then, the coating liquid was used to form a coating film between the first transparent electrode layer 21 and the second transparent electrode layer 22, and thereafter the polymerizable composition was polymerized in the coating film to obtain a light control sheet. The light control layer contained in the light control sheet had a thickness of 15 μm.
The blend ratios of materials (d) to (f) to the total weight of the coating liquid are set as follows. Before preparing the coating liquid, a mixture of the liquid crystal compound 23LM and a polymerizable composition was prepared at the following blend ratios.
(d) Liquid crystal compound 23LM: 55% by weight

(f) Polymerizable compound: 45% by weight

Next, the blend ratios of a mixture of (d) liquid crystal compound 23LM and (f) polymerizable composition and the material (e) were set as follows.
(d) Mixture of (f): 99% by weight

(e) Polymerization initiator: 1% by weight

In the above-described light control sheet that does not contain the dichroic dye 23DP and the spacers 23S, the blend ratio of the spacers 23S was changed to 0.3% by weight, 0.5% by weight, 1% by weight, 2% by weight, 3% by weight, 4% by weight, and 5% by weight to prepare seven types of light control sheets having different content ratios of the spacers 23 S. The area occupancy ratio of the spacers 23S was 0.27% when the blend ratio was 0.3% by weight, 0.45% when the blend ratio was 0.5% by weight, and 0.9% when the blend ratio was 1% by weight. Further, the area occupancy ratio of the spacers 23S was 1.8% when the blend ratio was 2% by weight, 2.7% when the blend ratio was 3% by weight, 3.6% when the blend ratio was 4% by weight, and 4.5% when the blend ratio was 5% by weight.
At this time, the blend ratio of the mixture of (d) liquid crystal compound 23LM, (f) polymerizable composition, and (e) polymerization initiator was reduced by the content ratio of the spacers 23 S based on the blend ratio when preparing the light control sheet that does not contain the spacers 23S. That is, the blend ratio of the mixture was set to 99.7% by weight when the blend ratio of the spacers 23S was 0.3% by weight, 99.5% by weight when the blend ratio of the spacers 23S was 0.5% by weight, and 99% by weight when the blend ratio of the spacers 23S was 1% by weight. The blend ratio of the mixture was set to 98% by weight when the blend ratio of the spacers 23S was 2% by weight, and 97% by weight when the blend ratio of the spacers 23S was 3% by weight. Further, the blend ratio of the mixture was set to 96% by weight when the blend ratio of the spacers 23S was 4% by weight, and 95% by weight when the blend ratio of the spacers 23S was 5% by weight.

In the above-described light control sheet that does not contain the dichroic dye 23DP and the spacers 23 S, the blend ratio of the dichroic dye 23DP was changed to 2% by weight, and the blend ratio of the spacers 23S was changed to 0.3% by weight, 0.5% by weight, 1% by weight, 2% by weight, 3% by weight, 4% by weight, and 5% by weight. Accordingly, there were prepared seven types of light control sheets 11N containing 2% by weight of the dichroic dye 23DP and having a different content ratio of the spacers 23 S.

At this time, the blend ratio of the mixture of (d) liquid crystal compound 23LM, (f) polymerizable composition, and (e) polymerization initiator was reduced by the blend ratios of the dichroic dye 23DP and the spacers 23S based on the blend ratio when preparing the light control sheet that does not contain the dichroic dye 23DP and the spacers 23S. That is, the blend ratio of the mixture was set to 97.7% by weight when the blend ratio of the spacers 23S was 0.3% by weight, 97.5% by weight when the blend ratio of the spacers 23S was 0.5% by weight, and 97% by weight when the blend ratio of the spacers 23S was 1% by weight. Further, the blend ratio of the mixture was set to 96% by weight when the blend ratio of the spacers 23S was 2% by weight, and 95% by weight when the blend ratio of the spacers 23S was 3% by weight. Further, the blend ratio of the mixture was set to 94% by weight when the blend ratio of the spacers 23S was 4% by weight, and 93% by weight when the blend ratio of the spacers 23S was 5% by weight.

In the above-described light control sheets 11N containing 2% by weight of the dichroic dye 23DP, the blend ratio of the dichroic dye 23DP was changed to 3% by weight, to thereby prepare seven types of light control sheets 11N that containing 3% by weight of the dichroic dye and having a different content ratio of the spacers 23S. At this time, the blend ratio of the mixture of (d) liquid crystal compound 23LM, (f) polymerizable composition, and (e) polymerization initiator was reduced by the blend ratios of the dichroic dye 23DP and the spacers 23S based on the blend ratio when preparing the light control sheet that does not contain the dichroic dye 23DP and the spacers 23S.

That is, the blend ratio of the mixture was set to 96.7% by weight when the blend ratio of the spacers 23S was 0.3% by weight, 96.5% by weight when the blend ratio of the spacers 23S was 0.5% by weight, and 96% by weight when the blend ratio of the spacers 23S was 1% by weight. Further, the blend ratio of the mixture was set to 95% by weight when the blend ratio of the spacers 23S was 2% by weight, and 94% by weight when the blend ratio of the spacers 23S was 3% by weight. Further, the blend ratio of the mixture was set to 93% by weight when the blend ratio of the spacers 23S was 4% by weight, and 92% by weight when the blend ratio of the spacers 23S was 5% by weight.

In the above-described light control sheets 11N containing 3% by weight of the dichroic dye 23DP, the blend ratio of the dichroic dye 23DP was changed to 4% by weight, to thereby prepare seven types of light control sheets 11N containing 4% by weight of the dichroic dye 23DP and having a different content ratio of the spacers 23S. At this time, the blend ratio of the mixture of (d) liquid crystal compound 23LM, (f) polymerizable composition, and (e) polymerization initiator was reduced by the blend ratios of the dichroic dye 23DP and the spacers 23S based on the blend ratio when preparing the light control sheet 11N containing 3% by weight of the dichroic dye 23DP.

That is, the blend ratio of the mixture was set to 95.7% by weight when the blend ratio of the spacers 23S was 0.3% by weight, 95.5% by weight when the blend ratio of the spacers 23S was 0.5% by weight, and 95% by weight when the blend ratio of the spacers 23S was 1% by weight. Further, the blend ratio of the mixture was set to 94% by weight when the blend ratio of the spacers 23S was 2% by weight, and 93% by weight when the blend ratio of the spacers 23S was 3% by weight. Further, the blend ratio of the mixture was set to 92% by weight when the blend ratio of the spacers 23S was 4% by weight, and 91% by weight when the blend ratio of the spacers 23S was 5% by weight.

In the above-described light control sheets 11N containing 3% by weight of the dichroic dye 23DP, the blend ratio of the dichroic dye 23DP was changed to 5% by weight, to thereby prepare seven types of light control sheets 11N containing 5% by weight of the dichroic dye 23DP and having a different content ratio of the spacers 23S. At this time, the blend ratio of the mixture of (d) liquid crystal compound 23LM, (f) polymerizable composition, and (e) polymerization initiator was reduced by the blend ratios of the dichroic dye 23DP and the spacers 23S based on the blend ratio when preparing the light control sheet 11N containing 2% by weight of the dichroic dye 23DP.

That is, the blend ratio of the mixture was set to 94.7% by weight when the blend ratio of the spacers 23S was 0.3% by weight, 94.5% by weight when the blend ratio of the spacers 23S was 0.5% by weight, and 94% by weight when the blend ratio of the spacers 23S was 1% by weight. Further, the blend ratio of the mixture was set to 93% by weight when the blend ratio of the spacers 23S was 2% by weight, and 92% by weight when the blend ratio of the spacers 23S was 3% by weight. Further, the blend ratio of the mixture was set to 91% by weight when the blend ratio of the spacers 23S was 4% by weight, and 90% by weight when the blend ratio of the spacers 23S was 5% by weight.

[Evaluation method]

[Total light transmittance]

For each of the above-described light control sheets, the total light transmittance in the first state and the total light transmittance in the second state were calculated using a method in accordance with ASTM D 1003-00. In each light control sheet, a state in which no potential difference occurs between a pair of transparent electrode layers, i.e. a state in which an AC voltage is not applied between a pair of transparent electrode layers, is set to the "first state". Further, a state in which an AC voltage having a rectangular wave shape of 50 Hz and 40 V is applied between a pair of transparent electrode layers was set to the second state. Further, for each light control sheet, the haze value in the second state was calculated using a method in accordance with ASTM D 1003-00. The haze value and total light transmittance were calculated using a haze and transparency measuring instrument (BYK haze-gard i instrument, manufactured by BYK Gardner).

[Contrast]

For each light control sheet, the contrast was calculated using the following equation.

(Contrast) = (total light transmittance in second state)/(total light transmittance in first state)

[Evaluation results]

With reference to Tables 1 to 5, the evaluation results of each light control sheet will be described.
The evaluation results of the light control sheet that does not contain the dichroic dye 23DP are as illustrated in Table 1 below.

[Table 1]

| Spacers (wt%) | Area occupancy ratio (%) | Total light transmittance in first state (%) | Total light transmittance in second state (%) | Contrast |
|---|---|---|---|---|
| 0 | 0 | 100 | 100 | 1.0 |
| 0.3 | 0.27 | 94 | 99 | 1.1 |
| 0.5 | 0.45 | 94 | 99 | 1.1 |
| 1 | 0.9 | 94 | 99 | 1.1 |
| 2 | 1.8 | 88 | 97 | 1.1 |
| 3 | 2.7 | 82 | 95 | 1.2 |
| 4 | 3.6 | 76 | 94 | 1.2 |
| 5 | 4.5 | 70 | 92 | 1.3 |

As confirmed from Table 1, the total light transmittance in the first state is 100% when the content ratio of the spacers 23 S is 0% by weight, and 94% when the content ratio of the spacers 23S is 0.3% by weight and 0.5% by weight. Further, it was confirmed that the total light transmittance in the first state is 94% when the content ratio of the spacers 23S is 1% by weight, 88% when the content ratio of the spacers 23S is 2% by weight, and 82% when the content ratio of the spacers 23S is 3% by weight. Further, it was confirmed that the total light transmittance in the first state is 76% when the content ratio of the spacers 23S is 4% by weight, and 70% when the content ratio of the spacers 23S is 5% by weight.
The total light transmittance in the second state is 100% when the content ratio of the spacers 23S is 0% by weight, and 99% when the content ratio of the spacers 23S is 0.3% by weight and 0.5% by weight. Further, it was confirmed that the total light transmittance in the second state is 99% when the content ratio of the spacers 23S is 1% by weight, 97% when the content ratio of the spacers 23S is 2% by weight, and 95% when the content ratio of the spacers 23S is 3% by weight. Further, it was confirmed that the total light transmittance in the second state is 94% when the content ratio of the spacers 23S is 4% by weight, and 92% when the content ratio of the spacers 23S is 5% by weight.
It was confirmed that the contrast is 1 when the content ratio of the spacers 23S is 0% by weight, and 1.1 when the content ratio of the spacers 23S is 0.3% by weight and 0.5% by weight. Further, it was confirmed that the contrast is 1.1 when the content ratio of the spacers 23S is 1% by weight, 1.1 when the content ratio of the spacers 23S is 2% by weight, and 1.16 when the content ratio of the spacers 23S is 3% by weight. Further, it was confirmed that the contrast is 1.24 when the content ratio of the spacers 23S is 4% by weight, and 1.31 when the content ratio of the spacers 23S is 5% by weight. These results demonstrate that in the light control sheet that does not contain the dichroic dye 23DP, the contrast is enhanced when the light control layer contains greater than or equal to 0.3% by weight of the spacers 23S, as compared to when the light control layer 23 does not contain the spacers 23S.

The evaluation results of the light control sheet 11N containing 2% by weight of the dichroic dye 23DP are as illustrated in Table 2 below.

[Table 2]

| Spacer (wt%) | Area occupancy ratio (%) | Total light transmittance in first state (%) | Total light transmittance in second state (%) | Contrast |
|---|---|---|---|---|
| 0.3 | 0.27 | 11.0 | 32.1 | 2.9 |
| 0.5 | 0.45 | 10.7 | 31.8 | 3.0 |
| 1 | 0.9 | 10.3 | 31.5 | 3.0 |
| 2 | 1.8 | 9.7 | 30.9 | 3.2 |
| 3 | 2.7 | 9.0 | 30.3 | 3.4 |
| 4 | 3.6 | 8.4 | 30.0 | 3.6 |
| 5 | 4.5 | 7.7 | 29.3 | 3.8 |

As confirmed from Table 2, the total light transmittance in the first state is 11.0% when the content ratio of the spacers 23S is 0.3% by weight, 10.7% by weight when the content ratio of the spacers 23S is 0.5% by weight, and 10.3% when the content ratio of the spacers 23S is 1% by weight. Further, it was confirmed that the total light transmittance in the first state is 9.7% when the content ratio of the spacers 23S is 2% by weight, and 9.0% when the content ratio of the spacers 23S is 3% by weight. Further, it was confirmed that the total light transmittance in the first state is 8.4% when the content ratio of the spacers 23S is 4% by weight, and 7.7% when the content ratio of the spacers 23S is 5% by weight.

It was confirmed that the total light transmittance in the second state is 32.1% when the content ratio of the spacers 23S is 0.3% by weight, 31.8% when the content ratio of the spacers 23S is 0.5% by weight, and 31.5% when the content ratio of the spacers 23S is 1% by weight. Further, it was confirmed that the total light transmittance in the second state is 30.9% when the content ratio of the spacers 23S is 2% by weight, and 30.3% when the content ratio of the spacers 23S is 3% by weight. Further, it was confirmed that the total light transmittance in the second state is 30.0% when the content ratio of the spacers 23S is 4% by weight, and 29.3% when the content ratio of the spacers 23S is 5% by weight.

It was confirmed that the contrast is 2.9 when the content ratio of the spacers 23S is 0.3% by weight, and 3.0 when the content ratio of the spacers 23S is 0.5% by weight and 1% by weight. Further, it was confirmed that the contrast is 3.2 when the content ratio of the spacers 23S is 2% by weight, and 3.4 when the content ratio of the spacers 23S is 3% by weight. Further, it was confirmed that the contrast is 3.6 when the content ratio of the spacers 23S is 4% by weight, and 3.8 when the content ratio of the spacers 23S is 5% by weight.

The evaluation results of the light control sheet 11N containing 3% by weight of the dichroic dye 23DP are as illustrated in Table 3 below.

[Table 3]

| Spacers (wt%) | Area occupancy ratio (%) | Total light transmittance in first state (%) | Total light transmittance in second state (%) | Contrast |
|---|---|---|---|---|
| 0.3 | 0.27 | 3.11 | 16.5 | 5.0 |
| 0.5 | 0.45 | 2.93 | 15.2 | 5.2 |
| 1 | 0.9 | 2.75 | 14.9 | 5.4 |
| 2 | 1.8 | 2.57 | 14.6 | 5.7 |
| 3 | 2.7 | 2.39 | 14.3 | 6.0 |
| 4 | 3.6 | 2.22 | 14.1 | 6.4 |
| 5 | 4.5 | 2.04 | 13.8 | 6.8 |

As confirmed from Table 3, the total light transmittance in the first state is 3.11% when the content ratio of the spacers 23S is 0.3% by weight, 2.93% when the content ratio of the spacers 23S is 0.5% by weight, and 2.75% when the content ratio of the spacers 23S is 1% by weight. Further, it was confirmed that the total light transmittance in the first state is 2.57% when the content ratio of the spacers 23S is 2% by weight, and 2.39% when the content ratio of the spacers 23S is 3% by weight. Further, it was confirmed that the total light transmittance in the first state is 2.22% when the content ratio of the spacers 23S is 4% by weight, and 2.04% when the content ratio of the spacers 23S is 5% by weight.

It was confirmed that the total light transmittance in the second state is 16.5% when the content ratio of the spacers 23S is 0.3% by weight, 15.2% when the content ratio of the spacers 23S is 0.5% by weight, and 14.9% when the content ratio of the spacers 23S is 1% by weight. Further, it was confirmed that the total light transmittance in the second state is 14.6% when the content ratio of the spacers 23S is 2% by weight, and 14.3% when the content ratio of the spacers 23S is 3% by weight. Further, it was confirmed that the total light transmittance in the second state is 14.1% when the content ratio of the spacers 23S is 4% by weight, and 13.8% when the content ratio of the spacers 23S is 5% by weight.

It was confirmed that the contrast is 5.0 when the content ratio of the spacers 23S is 0.3% by weight, 5.2 when the content ratio of the spacers 23S is 0.5% by weight, and 5.4 when the content ratio of the spacers 23S is 1% by weight. Further, it was confirmed that the contrast is 5.7 when the content ratio of the spacers 23S is 2% by weight, 6 when the content ratio of the spacers 23S is 3% by weight, 6.4 when the content ratio of the spacers 23S is 4% by weight, and 6.8 when the content ratio of the spacers 23S is 5% by weight.

In this manner, it was confirmed that the total light transmittances in the first state and the second state are significantly lowered when the light control layer 23 contains 3% by weight of the dichroic dye 23DP, as compared to when the light control layer 23 does not contain the dichroic dye 23DP. In addition, it was confirmed that the lowering rate of the total light transmittance in the first state is higher than the lowering rate of the total light transmittance in the second state. Further, it was confirmed that as the content ratio of the spacers 23S increases, the contrast also increases.

The evaluation results of the light control sheet 11N containing 4% by weight of the dichroic dye 23DP are as illustrated in Table 4 below.

[Table 4]

| Spacers (wt%) | Area occupancy ratio (%) | Total light transmittance in first state (%) | Total light transmittance in second state (%) | Contrast |
|---|---|---|---|---|
| 0.3 | 0.27 | 1.41 | 11.6 | 8.2 |
| 0.5 | 0.45 | 1.33 | 11.4 | 8.6 |
| 1 | 0.9 | 1.25 | 11.2 | 9.0 |
| 2 | 1.8 | 1.17 | 11.0 | 9.4 |
| 3 | 2.7 | 1.09 | 10.8 | 9.9 |
| 4 | 3.6 | 1.01 | 10.7 | 10.5 |
| 5 | 4.5 | 0.93 | 10.4 | 11.2 |

As confirmed from Table 4, the total light transmittance in the first state is 1.41% when the content ratio of the spacers 23S is 0.3% by weight, 1.33% when the content ratio of the spacers 23S is 0.5% by weight, and 1.25% when the content ratio of the spacers 23S is 1% by weight. Further, it was confirmed that the total light transmittance in the first state is 1.17% when the content ratio of the spacers 23S is 2% by weight, and 1.09% when the content ratio of the spacers 23S is 3% by weight. Further, it was confirmed that the total light transmittance in the first state is 1.01% when the content ratio of the spacers 23S is 4% by weight, and 0.93% when the content ratio of the spacers 23S is 5% by weight.

It was confirmed that the total light transmittance in the second state is 11.6% when the content ratio of the spacers 23S is 0.3% by weight, 11.4% when the content ratio of the spacers 23S is 0.5% by weight, and 11.2% when the content ratio of the spacers 23S is 1% by weight. Further, it was confirmed that the total light transmittance in the second state is 11% when the content ratio of the spacers 23S is 2% by weight, and 10.8% when the content ratio of the spacers 23S is 3% by weight. Further, it was confirmed that the total light transmittance in the second state is 10.7% when the content ratio of the spacers 23S is 4% by weight, and 10.4% when the content ratio of the spacers 23S is 5% by weight.

It was confirmed that the contrast is 8.2 when the content ratio of the spacers 23S is 0.3% by weight, 8.6 when the content ratio of the spacers 23S is 0.5% by weight, and 9.0 when the content ratio of the spacers 23S is 1% by weight. Further, it was confirmed that the contrast is 9.4 when the content ratio of the spacers 23S is 2% by weight, 9.9 when the content ratio of the spacers 23S is 3% by weight, 10.5 when the content ratio of the spacers 23S is 4% by weight, and 11.2 when the content ratio of the spacers 23S is 5% by weight.

In this manner, it was confirmed that the contrast can be further enhanced when the light control layer 23 contains 4% by weight of the dichroic dye 23DP, as compared to when the light control layer 23 contains 3% by weight of the dichroic dye 23DP. Further, it was confirmed that as the content ratio of the spacers 23S increases, the contrast also increases.

The evaluation results of the light control sheet 11N containing 5% by weight of the dichroic dye 23DP are as illustrated in Table 5 below.

[Table 5]

| Spacers (wt%) | Area occupancy ratio (%) | Total light transmittance in first state (%) | Total light transmittance in second state (%) | Contrast |
|---|---|---|---|---|
| 0.3 | 0.27 | 0.60 | 7.3 | 12.2 |
| 0.5 | 0.45 | 0.57 | 7.2 | 12.6 |
| 1 | 0.9 | 0.54 | 7.1 | 13.1 |
| 2 | 1.8 | 0.51 | 7.0 | 13.7 |
| 3 | 2.7 | 0.48 | 6.9 | 14.4 |
| 4 | 3.6 | 0.44 | 6.8 | 15.4 |
| 5 | 4.5 | 0.41 | 6.6 | 16.4 |

As confirmed from Table 5, the total light transmittance in the first state is 0.60% when the content ratio of the spacers 23S is 0.3% by weight, 0.57% when the content ratio of the spacers 23S is 0.5% by weight, and 0.54% when the content ratio of the spacers 23S is 1% by weight. Further, it was confirmed that the total light transmittance in the first state is 0.51% when the content ratio of the spacers 23S is 2% by weight, and 0.48% when the content ratio of the spacers 23S is 3% by weight. Further, it was confirmed that the total light transmittance in the first state is 0.44% when the content ratio of the spacers 23S is 4% by weight, and 0.41% when the content ratio of the spacers 23S is 5% by weight.

It was confirmed that the total light transmittance in the second state is 7.3% when the content ratio of the spacers 23S is 0.3% by weight, 7.2% when the content ratio of the spacers 23S is 0.5% by weight, and 7.1% when the content ratio of the spacers 23S is 1% by weight. Further, it was confirmed that the total light transmittance in the second state is 7.0% when the content ratio of the spacers 23S is 2% by weight, and 6.9% when the content ratio of the spacers 23S is 3% by weight. Further, it was confirmed that the total light transmittance in the second state is 6.8% when the content ratio of the spacers 23S is 4% by weight, and 6.6% when the content ratio of the spacers 23S is 5% by weight.

It was confirmed that the contrast is 12.2 when the content ratio of the spacers 23S is 0.3% by weight, 12.6 when the content ratio of the spacers 23S is 0.5% by weight, and 13.1 when the content ratio of the spacers 23S is 1% by weight. Further, it was confirmed that the contrast is 13.7 when the content ratio of the spacers 23S is 2% by weight, 14.4 when the content ratio of the spacers 23S is 3% by weight, 15.4 when the content ratio of the spacers 23S is 4% by weight, and 16.4 when the content ratio of the spacers 23S is 5% by weight.

In this manner, it was confirmed that the contrast can be further enhanced when the light control layer 23 contains 5% by weight of the dichroic dye 23DP, as compared to when the light control layer 23 contains 4% by weight of the dichroic dye 23DP. Further, it was confirmed that as the content ratio of the spacers 23S increases, the contrast also increases.

Figs. 7 to 10 are graphs based on the above-described evaluation results. In each of Figs. 7 to 9, the black solid circle indicates the evaluation result when the content ratio of the spacers 23S is 0.3% by weight, the black solid triangle indicates the evaluation result when the content ratio of the spacers 23S is 0.5% by weight, and the black solid rectangle indicates the evaluation result when the content ratio of the spacers 23S is 1% by weight. Further, in each graph, the white hollow circle indicates the evaluation result when the content ratio of the spacers 23S is 2% by weight, and the white hollow triangle indicates the evaluation result when the content ratio of the spacers 23S is 3% by weight. Further, in each graph, the white hollow lozenge indicates the evaluation result when the content ratio of the spacers 23S is 4% by weight, and the white hollow square indicates the evaluation result when the content ratio of the spacers 23S is 5% by weight.

In Figs. 7 and 8, it is difficult to separate values when the content ratio of the spacers 23S is 0.3% by weight, when the content ratio of the spacers 23S is 0.5% by weight, and when the content ratio of the spacers 23S is 1% by weight. Therefore, only the value when the content ratio of the spacers 23S is 0.3% by weight is illustrated.

As confirmed from Fig. 7, the change in the total light transmittance per unit content of the dichroic dye 23DP when the light control sheet 11N exhibits the second state is smaller when the content ratio of the dichroic dye 23DP is greater than or equal to 2% by weight and less than or equal to 5% by weight than when the content ratio of the dichroic dye 23DP is less than 2% by weight, regardless of the content ratio of the spacers 23S. This demonstrates that when the light control sheet 11N contains greater than or equal to 2% by weight of the dichroic dye 23DP, the fluctuation of the total light transmittance when the light control sheet 11N exhibits the second state is suppressed in the plane of the light control sheet 11N, even if the dichroic dye 23DP has a distribution in the plane of the light control sheet 11N.

As confirmed from Fig. 8, the change in the total light transmittance per unit content of the dichroic dye 23DP when the light control sheet 11N exhibits the first state is smaller when the content ratio of the dichroic dye 23DP is greater than or equal to 2% by weight and less than or equal to 5% by weight than when the content ratio of the dichroic dye 23DP is less than 2% by weight, regardless of the content ratio of the spacers 23S. This demonstrates that when the light control sheet 11N contains greater than or equal to 2% by weight of the dichroic dye 23DP, the fluctuation of the total light transmittance when the light control sheet 11N exhibits the first state is suppressed in the plane of the light control sheet 11N, even if the dichroic dye 23DP has a distribution in the plane of the light control sheet 11N.

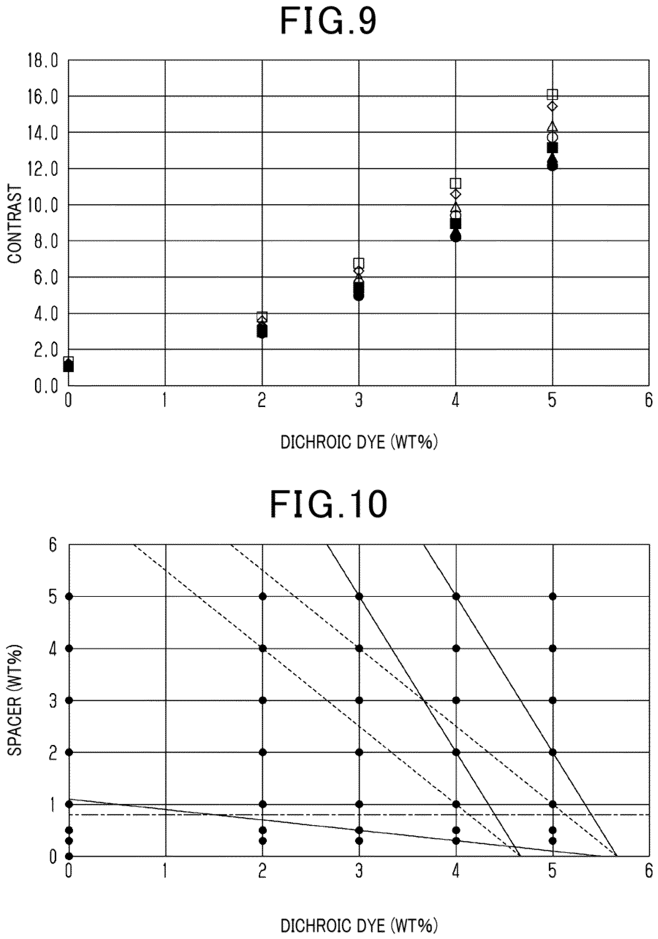

As confirmed from Fig. 9, a difference in the contrast due to the content ratio of the spacers 23S is larger as the content ratio of the dichroic dye 23DP is higher. In other words, it was confirmed that as the content ratio of the dichroic dye 23DP is higher, the effect that the increased content ratio of the spacers 23S enhances the contrast of the light control sheet 11N is more significant.

Fig. 10 illustrates a two-dimensional coordinate system defined by the content ratio of the spacers 23S and the content ratio of the dichroic dye 23DP.

As illustrated in Fig. 10, a point determined by the content ratio of the spacers 23 S and the content ratio of the dichroic dye 23DP is preferably within a region defined by the following conditions in the above-described two-dimensional coordinate system.

(Condition B1) The content ratio of the dichroic dye 23DP is greater than or equal to 3% by weight and less than or equal to 5% by weight.

(Condition C1) A point determined by the content ratio of the spacers 23S and the content ratio of the dichroic dye 23DP is within a region of greater than or equal to equation (1) below:

$$y = -0.2x + 1.1 \ ... \ \text{equation (1)}.$$

In equation (1), the content ratio of the spacers 23S is y, and the content ratio of the dichroic dye 23DP is x. A straight line corresponding to equation (1) is denoted by a solid line in Fig. 10.

A point determined by the content ratio of the spacers 23S and the content ratio of the dichroic dye 23DP is preferably within a region defined by the following condition A1, in addition to conditions B1 and C1.

(Condition A1) The content ratio of the spacers 23S is less than or equal to 5% by weight.

Further, in a two-dimensional coordinate system defined by the area occupancy ratio of the spacers 23S and the content ratio of the dichroic dye 23DP, a point determined by the area occupancy ratio of the spacers 23S and the content ratio of the dichroic dye 23DP is preferably within a region defined by the following conditions.

(Condition B2) The content ratio of the dichroic dye 23DP is greater than or equal to 3% by weight and less than or equal to 5% by weight.

(Condition C2) A point determined by the area occupancy ratio of the spacers 23 S and the content ratio of the dichroic dye 23DP is within a region of greater than or equal to equation (2) below:

$$y = -0.18x + 0.99 \ ... \ \text{equation (2)}.$$

In equation (2), the area occupancy ratio of the spacers 23S is y, and the content ratio of the dichroic dye 23DP is x.

A point determined by the area occupancy ratio of the spacers 23S and the content ratio of the dichroic dye 23DP is preferably within a region defined by the following condition A2, in addition to conditions B2 and C2.

(Condition A2) The area occupancy ratio of the spacers 23S is less than or equal to 4.5%.

According to the present test example, it was confirmed that the contrast exceeds 5 when both the content ratio of the spacers 23S and the content ratio of the dichroic dye 23DP are within a region defined by the above-described conditions B1 and C1, preferably in a region defined by conditions A1 to C1. This effect can also be obtained when both the area occupancy ratio of the spacers 23S and the content ratio of the dichroic dye 23DP are within a region defined by the above-described conditions B2 and C2, preferably in a region defined by conditions A2 to C2.

A point determined by the content ratio of the spacers 23S and the content ratio of the dichroic dye 23DP may be within a region defined by the following conditions in the above-described two-dimensional coordinate system.

(Condition A3) The content ratio of the spacers 23S is greater than or equal to 2% by weight and less than or equal to 5% by weight.

(Condition B3) The content ratio of the dichroic dye 23DP is greater than or equal to 2% by weight and less than or equal to 5% by weight.

(Condition C3) A point determined by the content ratio of the spacers 23S and the content ratio of the dichroic dye 23DP is within a region defined by the following two equations:

$$y = -3x + 14 \ ... \ \text{equation (3)},$$

and

$$y = -3x + 17 \text{ ... equation (4)}.$$

In equations (3) and (4), the content ratio of the spacers 23S is y, and the content ratio of the dichroic dye 23DP is x. A straight line corresponding to equation (3) and a straight line corresponding to equation (4) are denoted by solid lines in Fig. 10.

Further, in a two-dimensional coordinate system defined by the area occupancy ratio of the spacers 23S and the content ratio of the dichroic dye 23DP, a point determined by the area occupancy ratio of the spacers 23S and the content ratio of the dichroic dye 23DP may be within a region defined by the following conditions.

(Condition A4) The area occupancy ratio of the spacers 23S is greater than or equal to 1.8% and less than or equal to 4.5%

(Condition B4) The content ratio of the dichroic dye 23DP is greater than or equal to 2% by weight and less than or equal to 5% by weight.

(Condition C4) A point determined by the area occupancy ratio of the spacers 23S and the content ratio of the dichroic dye 23DP is within a region defined by the following two equations:

$$y = -3x + 12.6 \text{ ... equation (5)},$$

and

$$y = -3x + 15.3 \text{ ... equation (6)}.$$

In equations (5) and (6), the area occupancy ratio of the spacers 23S is y, and the content ratio of the dichroic dye 23DP is x.

According to the present test example, it was confirmed that when both the content ratio of the spacers 23S and the content ratio of the dichroic dye 23DP are within a region defined by the above-described conditions A3 to C3, it is possible to achieve both the total light transmittance in the second state being greater than or equal to 7% and the contrast being greater than or equal to 6.5. That is, it can be said that the light control sheet 11N is unlikely to become excessively dark when the light control sheet 11N exhibits the second state, while the contrast is enhanced. This effect can also be obtained when both the area occupancy ratio of the spacers 23S and the content ratio of the dichroic dye 23DP are within a region defined by the above-described conditions A4 to C4.

Note that the occupied area and occupied surface area of the spacers 23S in the light control sheet 11N significantly contribute to enhancement of the contrast of the light control sheet 11N. In addition, the occupied area and occupied surface area of the spacers 23S have a correlation with the number of the spacers 23S. It is considered that since the specific gravity of the spacer 23S used in the present embodiment is 2, the above-described condition A3, equation (3), and equation (4) can be generalized using specific gravity S as described below. Further, in the light control sheet 11N including the spacers 23S having specific gravity S, a point determined by the content ratio of the spacers 23S and the content ratio of the dichroic dye 23DP is preferably within a region defined by the following conditions in the two-dimensional coordinate system. The specific gravity S is a ratio of the mass of a target material per unit volume to the mass of a reference material per unit volume. The spacers 23S are an example of a target material.

(Condition A3') The content ratio of the spacers 23S is greater than or equal to 2 x (S/2)% by weight and less than or equal to 5 x (S/2)% by weight.

(Condition B3) The content ratio of the dichroic dye 23DP is greater than or equal to 2% by weight and less than or equal to 5% by weight.

(Condition C3') A point determined by the content ratio of the spacers 23S and the content ratio of the dichroic dye 23DP is within a region defined by the following two equations:

$$y = (-3x + 14)(S/2) \text{ ... equation (3')},$$

and

$$y = (-3x + 17)(S/2) \text{ ... equation (4')}.$$

The above-described condition A1 can be generalized using specific gravity S as described below, in the same manner as condition A3.

(Condition A1') The content ratio of the spacers 23S is less than or equal to 5 x (S/2)% by weight.

When the specific gravity S is 1, a straight line corresponding to equation (3') and a straight line corresponding to equation (4') are denoted by broken lines in Fig. 10.

A point determined by the content ratio of the spacers 23S and the content ratio of the dichroic dye 23DP may be within a region defined by the following conditions in the two-dimensional coordinate system.

(Condition A1) The content ratio of the spacers 23S is less than or equal to 5% by weight.

(Condition B1) The content ratio of the dichroic dye 23DP is greater than or equal to 3% by weight and less than or equal to 5% by weight.

(Condition C1) A point determined by the content ratio of the spacers 23S and the content ratio of the dichroic dye 23DP is within a region of greater than or equal to equation (1) below:

$$y = -0.2x + 1.1 \text{ ... equation (1)}.$$

(Condition C5) A point determined by the content ratio of the spacers 23S and the content ratio of the dichroic dye 23DP is within a region of less than or equal to equation (4) below:

$$y = -3x + 17 \text{ ... equation (4)}.$$

A point determined by the area occupancy ratio of the spacers 23S and the content ratio of the dichroic dye 23DP may be within a region defined by the following conditions in the two-dimensional coordinate system.

(Condition A2) The area occupancy ratio of the spacers 23S is less than or equal to 4.5%.

(Condition B2) The content ratio of the dichroic dye 23DP is greater than or equal to 3% by weight and less than or equal to 5% by weight.

(Condition C2) A point determined by the area occupancy ratio of the spacers 23 S and the content ratio of the dichroic dye 23DP is within a region of greater than or equal to equation (2) below:

$$y = -0.18x + 0.99 \text{ ... equation (2)}.$$

(Condition C6) A point determined by the area occupancy ratio of the spacers 23 S and the content ratio of the dichroic dye 23DP is within a region of less than or equal to equation (6) below:

$$y = -3x + 15.3 \text{ ... equation (6)}.$$

According to the present test example, it was confirmed that when both the content ratio of the spacers 23S and the content ratio of the dichroic dye 23DP are within a region defined by the above-described conditions A1 to C5, it is possible to achieve both the total light transmittance in the second state being greater than or equal to 7% and the contrast exceeding 5. That is, it can be said that the light control sheet 11N is unlikely to become excessively dark when the light control sheet 11N exhibits the second state, while the contrast is enhanced. This effect can also be obtained when both the area occupancy ratio of the spacers 23S and the content ratio of the dichroic dye 23DP are within a region defined by the above-described conditions A2 to C6.

As described above, the following advantageous effects can be obtained according to an embodiment of the light control sheet and the light control device.

(1) The area occupancy ratio of the spacers 23S exhibiting a black color is greater than or equal to 0.7%, so that the contrast of the light control sheets 11N and 11R can be enhanced.

(2) The light control layer 23 contains greater than or equal to 2% by weight and less than or equal to 5% by weight of the dichroic dye 23DP, so that the fluctuation of the total light transmittance in the plane of the light control sheets 11N and 11R in the second state can be suppressed.

(3) When the content ratio of the dichroic dye 23DP and the content ratio of the spacers 23S are within a region defined by conditions A3' to C3', both the total light transmittance when the light control sheets 11N and 11R are in the second state and the contrast of the light control sheets 11N and 11R are within a suitable range.

(4) The void diameter is greater than or equal to 0.1 μm and less than or equal to 30 μm, and the content ratio of the liquid crystal composition 23L is greater than or equal to 30% by weight and less than or equal to 70% by weight, so that the effectiveness of the content ratio of the spacers 23S and the content ratio of the dichroic dye 23DP can be enhanced.

(5) The haze value of the light control sheets 11N and 11R in the first state is greater than or equal to 80%, so that the effectiveness of the content ratio of the spacers 23S and the content ratio of the dichroic dye 23DP can be enhanced.

(6) When the area occupancy ratio of the spacers 23S and the content ratio of the dichroic dye 23DP are within a region defined by conditions B1 and C1, the contrast of the light control sheet 11N is enhanced.

(7) When the area occupancy ratio of the spacers 23S and the content ratio of the dichroic dye 23DP are within a region defined by conditions A2 to C6, the total light transmittance when the light control sheet 11N exhibits the second state can be enhanced while the contrast of the light control sheet 11N is enhanced.

[Modification examples]

The above-described embodiment can be implemented with the following modifications.

[Spacers 23S]

· The specific gravity of the spacers 23S is not limited to 2, and may be, for example, 1.2. For example, the specific gravity of the spacers 23S made of acrylic resin containing carbon black is 1.2. The area occupancy ratio of the spacers 23S made of acrylic resin is 0.45% when the content is 0.3% by weight, the area occupancy ratio is 0.75% when 0.5% by weight, and the area occupancy ratio is 1.2% when 0.8% by weight. Further, the area occupancy ratio of the spacers 23S made of acrylic resin is 1.5% when the content is 1% by weight, the area occupancy ratio is 3% when 2% by weight, and the area occupancy ratio is 4.5% when 3% by weight. When the area occupancy ratio of the spacers 23S is greater than or equal to 0.7%, even the spacers 23S made of acrylic resin can have an effect equivalent to that of the above-described spacers 23S made of silica. That is, a comparable effect can be obtained as long as the area occupancy ratio of the spacers 23S in the light control layer 23 is comparable, regardless of the specific gravity of the spacers 23S.

[Additional Notes]

A technical idea derived from the above-described embodiment and modification examples is described below.

[Additional Note 1]

A light control sheet including:
a first transparent electrode layer;

a second transparent electrode layer; and

a light control layer located between the first transparent electrode layer and the second transparent electrode layer,

the light control sheet exhibiting a first state and a second state having a haze value lower than that of the first state according to the magnitude of a voltage applied to the light control layer, in which

the light control layer contains

a transparent polymer layer containing a plurality of voids,

a liquid crystal composition filled in the voids, and

spacers that define the thickness of the light control layer,

the spacers exhibit a black color, and

the content ratio of the spacers in the light control layer is greater than or equal to 2% by weight

According to the light control sheet, the contrast of the light control sheet can be enhanced when the light control layer contains greater than or equal to 2% by weight of the spacers exhibiting a black color, as compared to when it does not contain the spacers.

[Reference Signs List]

| 10N, 10R | Light control device |
| 11N, 11R | Light control sheet |
| 12 | Driver unit |
| 21 | First transparent electrode layer |
| 22 | Second transparent electrode layer |
| 23 | Light control layer |
| 24 | First transparent substrate |
| 25 | Second transparent substrate |
| 27 | First alignment layer |
| 28 | Second alignment layer |

**Claims**

1.  A light control sheet comprising:

    a first transparent electrode layer;
    a second transparent electrode layer; and
    a light control layer located between the first transparent electrode layer and the second transparent electrode layer,
    the light control sheet exhibiting a first state and a second state having a haze value lower than that of the first state according to a magnitude of a voltage applied to the light control layer, wherein
    the light control layer contains
    a transparent polymer layer containing a plurality of voids,
    a liquid crystal composition filled in the voids and containing a dichroic dye, and
    spacers that define a thickness of the light control layer,
    the spacers exhibit a black color, and
    an area occupancy ratio of the spacers in the light control layer is greater than or equal to 0.7%.

2.  The light control sheet according to claim 1,
    wherein a content ratio of the dichroic dye in the light control layer is greater than or equal to 2% by weight and less than or equal to 5% by weight.

3.  The light control sheet according to claim 1 or 2, wherein

    a content ratio of the spacers is greater than or equal to 2 x (S/2)% by weight and less than or equal to 5 x (S/2)% by weight, and
    in a two-dimensional coordinate system defined by the content ratio of the spacers and a content ratio of the dichroic dye, the content ratio of the spacers and the content ratio of the dichroic dye are within a region defined by two equations below:

$$y = (-3x + 14)(S/2) \dots \text{ equation (1)},$$

and

$$y = (-3x + 17)(S/2) \dots \text{ equation (2)}$$

wherein, y is the content ratio of the spacers, x is the content ratio of the dichroic dye, and S is a specific gravity of the spacers.

4. The light control sheet according to any one of claims 1 to 3, wherein

the voids have a void diameter of greater than or equal to 0.1 $\mu$m and less than or equal to 30 $\mu$m, and
a content ratio of the liquid crystal composition in the light control layer is greater than or equal to 30% by weight and less than or equal to 70% by weight.

5. The light control sheet according to any one of claims 1 to 4,
wherein the light control sheet in the first state has a haze value of greater than or equal to 80%.

6. A light control sheet, comprising:

a first transparent electrode layer;
a second transparent electrode layer; and
a light control layer located between the first transparent electrode layer and the second transparent electrode layer,
the light control sheet exhibiting a first state and a second state having a haze value lower than that of the first state according to a magnitude of a voltage applied to the light control layer, wherein
the light control layer includes
a transparent polymer layer containing a plurality of voids, a liquid crystal composition filled in the voids, and spacers that define a thickness of the light control layer,
the spacers exhibits a black color,
a content ratio of the dichroic dye is greater than or equal to 3% by weight and less than or equal to 5% by weight,
in a two-dimensional coordinate system defined by an area occupancy ratio of the spacers and the content ratio of the dichroic dye, the area occupancy ratio of the spacers and the content ratio of the dichroic dye are within a region of greater than or equal to an equation below:

$$y = -0.18x + 0.99$$

wherein, y is the area occupancy ratio of the spacers, and x is the content ratio of the dichroic dye.

7. The light control sheet according to claim 6, wherein

the area occupancy ratio of the spacers is less than or equal to 4.5%, and
a point determined by the area occupancy ratio of the spacers and the content ratio of the dichroic dye is within a region of less than or equal to an equation below:

$$y = -3x + 13.5.$$

8. A light control device, comprising:

the light control sheet according to claim 1 or 2, and
a driver unit configured to be capable of applying a voltage to the light control layer contained in the light control sheet.

# FIG.1

# FIG.2

# FIG.3

# FIG.4

# FIG.5

# FIG.6

# FIG.7

# FIG.8

# FIG.9

# FIG.10

## INTERNATIONAL SEARCH REPORT

| International application No. |
|---|
| **PCT/JP2023/027592** |

| | |
|---|---|
| **A. CLASSIFICATION OF SUBJECT MATTER** | |

*G02F 1/137*(2006.01)i; *G02F 1/13*(2006.01)i; *G02F 1/1334*(2006.01)i; *G02F 1/1339*(2006.01)i
FI:    G02F1/137; G02F1/13 505; G02F1/1334; G02F1/1339 500

According to International Patent Classification (IPC) or to both national classification and IPC

| | |
|---|---|
| **B. FIELDS SEARCHED** | |

Minimum documentation searched (classification system followed by classification symbols)

    G02F1/137; G02F1/13; G02F1/1334; G02F1/1339

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| | |
|---|---|
| **C. DOCUMENTS CONSIDERED TO BE RELEVANT** | |

| Category* | Citation of document, with indication, where appropriate, of the relevant passages | Relevant to claim No. |
|---|---|---|
| X<br>Y<br>A | WO 2020/262219 A1 (TOPPAN PRINTING CO LTD) 30 December 2020 (2020-12-30)<br>    paragraphs [0012]-[0108], fig. 1-9 | 1, 5, 8<br>2, 4<br>3, 6-7 |
| Y | JP 2018-146654 A (TOPPAN PRINTING CO LTD) 20 September 2018 (2018-09-20)<br>    paragraphs [0018]-[0034] | 2 |
| Y | JP 2022-516008 A (MERCK PATENT GMBH) 24 February 2022 (2022-02-24)<br>    paragraphs [0297]-[0300], [0491] | 2 |
| Y | WO 2019/208261 A1 (NITTO DENKO CORPORATION) 31 October 2019 (2019-10-31)<br>    paragraphs [0033], [0036], [0091] | 4 |
| A | JP 2000-319529 A (HAYAKAWA RUBBER CO LTD) 21 November 2000 (2000-11-21)<br>    paragraphs [0079]-[0082] | 3 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **15 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/027592**

| Patent document cited in search report | | | Publication date (day/month/year) | Patent family member(s) | | | Publication date (day/month/year) |
|---|---|---|---|---|---|---|---|
| WO | 2020/262219 | A1 | 30 December 2020 | US 2022/0121054 A1 paragraphs [0021]-[0141], fig. 1-9 | | | |
| | | | | JP | 2021-9188 | A | |
| | | | | EP | 3992702 | A1 | |
| | | | | CN | 113939765 | A | |
| JP | 2018-146654 | A | 20 September 2018 | JP | 6376232 | B1 | |
| JP | 2022-516008 | A | 24 February 2022 | US 2022/0064532 A1 paragraphs [0405]-[0408], [0547]-[0552] | | | |
| | | | | WO | 2020/127141 | A1 | |
| | | | | EP | 3898893 | A1 | |
| | | | | CN | 113195683 | A | |
| | | | | KR | 10-2021-0106495 | A | |
| | | | | TW | 202039794 | A | |
| WO | 2019/208261 | A1 | 31 October 2019 | US 2021/0231997 A1 paragraphs [0050], [0053], [0133] | | | |
| | | | | CN | 112041737 | A | |
| | | | | KR | 10-2021-0003747 | A | |
| | | | | TW | 202011085 | A | |
| JP | 2000-319529 | A | 21 November 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020177197 A